# FASCICULE DE BREVET EUROPEEN

(11) **EP 2 293 226 B1**
(45) Date de publication et mention de la délivrance du brevet: **27.05.2015**
(21) Numéro de dépôt: 10174784.8
(22) Date de dépôt: 01.09.2010
(51) Int. Cl.: G06K 19/077

(54) **Dispositif électronique comprenant une carte à microcircuit**
Elektronische Vorrichtung, die eine Mikrochip-Karte umfasst
Electronic device including a chip card

(30) Priorité: 03.09.2009 FR 0956003
(43) Date de publication de la demande: 09.03.2011
(73) Titulaire: Oberthur Technologies, 92300 Levallois-Perret (FR)
(72) Inventeur: Meslin, Jean-Marc, 95170, DEUIL LA BARRE (FR)
(74) Mandataire: Delumeau, François Guy

(56) Documents cités:
- EP-A- 1 535 240
- WO-A-2008/003586
- US-A1- 2004 070 952

## Description

La présente invention concerne le domaine technique de la personnalisation des dispositifs électroniques portables, ou de poche, tels que notamment les clés électroniques.

Elle s'applique plus particulièrement mais non spécifiquement aux clés mémoire USB (acronyme de l'expression anglo-saxonne « Universal Serial Bus »), notamment utilisées pour le transport et le stockage de données informatiques.

En général, une clé électronique comprend un ensemble de circuits électroniques, désigné ci-après par moyens électroniques de la clé, porté généralement par un support de circuit imprimé, tel qu'un PCB, le tout étant logé à l'intérieur d'un boîtier.

La clé est munie également d'un connecteur USB adapté pour venir en prise avec un port conforme à la norme USB d'un terminal externe, tel qu'un ordinateur personnel. Ce connecteur comprend généralement une première partie dépassant du boîtier et une deuxième partie raccordée électriquement aux moyens électroniques.

Dans de nombreuses applications notamment dans le domaine des transports publics, de la sécurité, etc., il est souhaitable de personnaliser la clé électronique relativement au possesseur de la clé afin de manière à permettre son identification et son authentification. Ainsi, il est connu d'associer un visuel de la clé avec des données personnelles mémorisés par exemple par les moyens électroniques de la clé.

On connaît déjà de l'état de la technique, notamment du document EP 1 535 240, un dispositif électronique personnalisable comprenant une carte à microcircuit munie d'une interface de contacts externes conformes à une norme prédéfinie de cartes à microcircuit ainsi qu'un support de carte, le support de carte comprenant un connecteur conforme à une norme prédéfinie de clé mémoire, tel qu'un connecteur USB.

La carte comprend notamment sur une de ses faces un élément de personnalisation tel qu'une photographie, un numéro d'identification, etc.

Dans ce document, le support de carte comprend en outre un logement de réception de la carte muni d'un terminal de lecture de carte. Ce terminal de lecture de carte comprend une pluralité de connecteurs agencés pour venir en contact avec l'interface externe de la carte lorsque cette dernière est insérée dans le logement.

Ainsi, la fabrication du support peut être standard car seule la carte porte les éléments de personnalisation de la clé et peut être insérée au dernier moment dans le logement.

Toutefois, ce dispositif présente l'inconvénient d'exiger un ajustement très précis des dimensions du logement par rapport à la carte pour éviter toute sortie intempestive de cette dernière hors du logement. Pour limiter les risques de perte de la carte, le document prévoit de ménager un passage pour une chaîne au niveau d'une entrée de la fente ou encore éventuellement un dispositif de verrouillage.

Ceci rend complexe la fabrication du dispositif électronique et entraîne par conséquent des coûts de production relativement importants.

L'invention a notamment pour but de proposer une alternative à cette solution avec des coûts de production réduits. WO 2008/003586 A1 divulgue un autre dispositif de l'art antérieur.

A cet effet, l'invention a pour objet un dispositif selon la revendication 1.

Du fait que la carte peut être rapportée par collage, cela limite les risques de perte tout en simplifiant la fabrication du dispositif. En outre, la deuxième face, opposée à la première face portant la première interface, est directement visible de l'extérieur du dispositif. Du fait que le support de carte ne porte ni le microcircuit ni l'élément de personnalisation, sa fabrication peut être réalisée indépendamment de la personnalisation du dispositif.

En outre, des équipements classiques d'imprimerie de carte à puce peuvent être utilisés pour réaliser la personnalisation graphique du dispositif car l'élément de personnalisation graphique ainsi que le microcircuit pouvant mémoriser des éléments personnels du possesseur du dispositif sont regroupés dans la carte.

Un dispositif selon l'invention peut en outre comporter l'une ou plusieurs des caractéristiques suivantes :
- le support comprend des moyens de communication de données avec un équipement extérieur raccordés à la deuxième interface de manière à ce que des données puissent être échangées entre le microcircuit et les moyens lorsque les deux interfaces coopèrent ;
- les moyens de communication comprennent un connecteur conforme à une norme prédéfinie de clé mémoire et/ou une antenne de communication à champ proche ;
- le support comprend des moyens de conversion d'un protocole de communication du microcircuit en un protocole de communication des moyens et inversement ;
- l'élément de personnalisation est associée à au moins une donnée de personnalisation mémorisée dans le microcircuit et accessible à l'aide des moyens de communication ;
- l'emplacement de réception est délimité par une bordure formant cadre de positionnement de la carte sur l'emplacement ;
- le cadre et la carte ont un profil à détrompeur complémentaire afin d'imposer un sens de montage de la carte sur l'emplacement ;
- la première interface comprend une pluralité de plages de contact et la deuxième interface comprend une pluralité de connecteurs balais faisant saillie sur l'emplacement ;
- la carte comprend un corps de format inférieur au format ID-1 défini par la norme ISO-7816.

L'invention a en outre pour objet une carte à microcircuit selon la revendication 10.

De préférence, la couche de matériau adhésif est en saillie par

De préférence, la couche de matériau adhésif est en saillie par rapport à la première interface. Ceci permet d'éviter d'exposer directement le microcircuit à des chocs ou divers impacts.

D'autres caractéristiques et avantages de l'invention apparaîtront à la lumière de la description qui suit, faite en référence aux dessins annexés dans lesquels :
- la figure 1 représente un dispositif électronique à clé mémoire personnalisable selon l'invention ;
- la figure 2 est une vue de dessus d'une carte selon l'invention ;
- la figure 3 est une vue de dessous de la carte représentée sur la figure 2 ;
- la figure 4 est une vue en coupe selon la ligne 4-4 de la figure 3 ;
- la figure 5 représente un corps de carte muni d'une prédécoupe délimitant la carte de la figure 2 ;
- la figure 6 représente le dispositif électronique de la figure 1 sans la carte ;
- la figure 7 est une vue en coupe selon la ligne 7-7 de la figure 6.

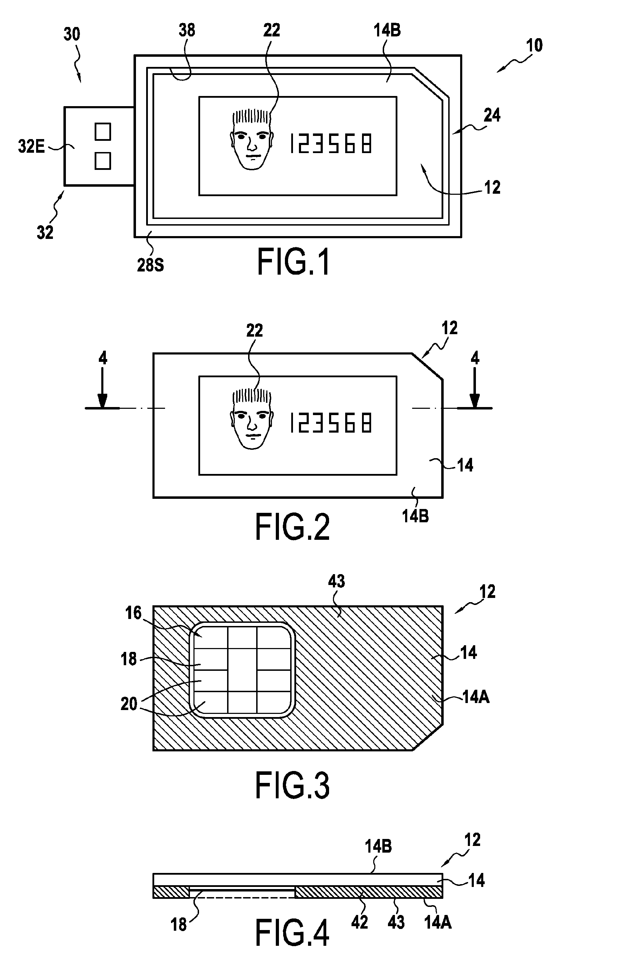

On a représenté sur **la** **figure 1** un dispositif électronique selon l'invention désigné par la référence générale 10. Dans l'exemple décrit, le dispositif électronique est une clé électronique 10 de type connecteur USB.

Ce dispositif électronique 10 comprend notamment une carte 12 à microcircuit 16 représentée en détail sur **les** **figures 2 à 5**. La carte 12 comprend un corps de carte 14 délimitant des première 14A et deuxième 14B faces opposées.

Plus particulièrement, cette carte 12 est munie sur la première face 14A d'une première interface 18 de contact raccordée au microcircuit 16. Cette première interface 18 comprend de préférence une pluralité de plages de contact 20. Dans cet exemple, la carte 12 est conforme à la norme ISO 7816 des cartes à microcircuit. Cette norme définit notamment les dimensions, l'emplacement et l'affectation des plages de contact, désignées classiquement par C1 à C8, affleurant sur la surface de la carte 12.

De préférence, le corps 14 de la carte 12 comprend un format inférieur au format ID-1 défini par la norme ISO-7816. Dans l'exemple illustré, le corps 14 a des dimensions extérieures conformes à celles définies par le format ID-000, habituellement utilisé pour les « cartes SIM ».

Comme cela est représenté en détail sur **la** **figure 3**, les plages de contact C1 à C8 sont agencées en deux rangées de quatre plages respectivement C1 à C4 et C5 à C8 sensiblement parallèles entre elles.

La première interface 18 et le microcircuit 16 forment un module à microcircuit comprenant notamment un support de module non représenté sur les figures et délimitant des faces opposées, l'une des faces portant la première interface 18 et la face opposée portant le microcircuit 12. La première interface 18 et le microcircuit 12 sont raccordés par exemple électriquement entre eux par des fils électriques traversant des vias ménagés dans le support de module. Le module à microcircuit est par exemple logé dans une cavité de réception ménagée dans le corps 14 de la carte 12.

En outre, plus précisément, la deuxième face 14A de la carte 12 porte un élément 22 de personnalisation graphique de la carte comme cela est illustré sur **la** **figure 2**. Par exemple, l'élément de personnalisation 22 comprend une chaîne de caractères alphanumériques, une photographie ou encore un dessin, etc.

L'élément de personnalisation graphique 22 comprend au moins une donnée mémorisée dans le microcircuit 16 du module.

De préférence, l'élément de personnalisation graphique 22 est imprimé sur la première face 14A de la carte 12, par exemple à l'aide de techniques d'impression connues par l'homme du métier travaillant dans le domaine de l'impression des cartes à puce.

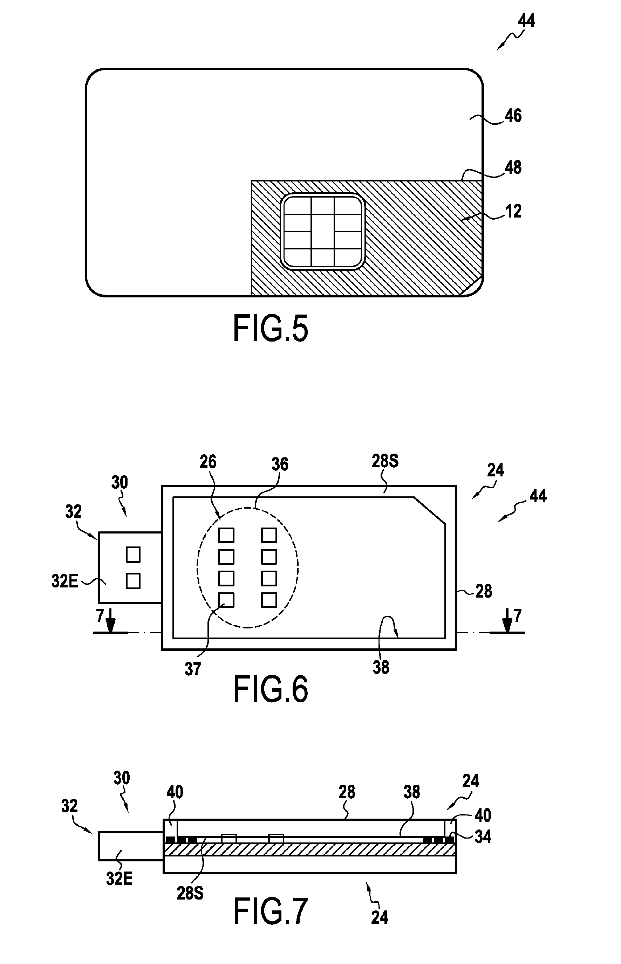

Le dispositif électronique 10 comprend en outre un support 24 de lecture de la carte portant une deuxième interface 26 de contact configurée pour coopérer avec la première interface 18 par contact électrique. Ce support 24 comprend un boîtier 28. Dans cet exemple, le boîtier 26 est sensiblement de forme générale parallélépipédique (**figures 6 et 7**). Il est réalisé par exemple essentiellement dans un matériau comprenant une matière plastique.

De préférence, le support 24 comprend des moyens 30 de communication de données avec un équipement extérieur (non représenté).

Par exemple, les moyens de communication 30 comprennent un connecteur 32 conforme à une norme prédéfinie de clé mémoire. Dans l'exemple illustré, le connecteur 32 est de type USB et est destiné à venir en prise avec un port USB d'un équipement extérieur (non représenté) tel que par exemple un ordinateur personnel.

Les moyens de communication 30 comprennent également, dans cet exemple, une antenne 34 de communication à champ proche.

En variante, les moyens de communication 30 peuvent comprendre soit le connecteur 32 soit l'antenne 34 ou encore un module de communication sans fil de type WIFI, etc. (non représenté).

De préférence, la deuxième interface 26 est raccordée aux moyens de communication 30 de manière à ce que les deux interfaces 18 et 26 soient aptes à coopérer l'une avec l'autre pour autoriser un échange de données entre les moyens de communication 30 et le microcircuit 16.

Ainsi, la deuxième interface 26 forme une tête 36 de lecture de la carte 12 et comprend par exemple une pluralité de connecteurs balais 37. Ainsi, cette deuxième interface 26 doit tenir compte de la norme utilisée de la première interface 18.

En outre, de préférence, le support 24 comprend des moyens (non représentés) de conversion d'un protocole utilisé par le microcircuit 16 en un protocole utilisé par les moyens de communication 30 et inversement.

Plus précisément, le boîtier 28 du support 24 incorpore au moins partiellement les moyens de communication 30 comme cela est représenté par exemple sur **les** **figures 6 et 7**. On voit ainsi notamment que le connecteur USB comprend une partie externe 32E apte à venir en prise avec un port USB d'un équipement externe et une partie interne (non représentée) logée à l'intérieur du boîtier 28.

En outre, de préférence, l'élément de personnalisation graphique 22 est associé à au moins une donnée de personnalisation mémorisée dans le microcircuit 16 et accessible à l'aide des moyens de communication 30.

Plus particulièrement, le boîtier 28 présente une face externe 28S délimitant un emplacement 38 de réception de la carte 12 à l'intérieur duquel affleure sensiblement la deuxième interface 26.

Ainsi, de façon plus précise, la carte 12 est rapportée par collage sur cet emplacement 38 de manière à ce que les deux interfaces 18 et 26 coopèrent et à ce que l'élément de personnalisation 22 soit visible.

De préférence, comme on le voit notamment sur **la** **figure 7**, l'emplacement de réception 38 est délimité par une bordure 40 formant cadre de positionnement de la carte 12 sur l'emplacement 38. Par exemple, le cadre 40 et la carte 12 ont un profil à détrompeur complémentaire afin d'imposer un sens de montage de la carte 12 sur l'emplacement 38 (**figure 3** **et** **6**).

De préférence, la carte 12 comprend sur la première face 14A une couche 42 de matériau adhésif autocollant agencée pour entourer sensiblement la première interface 18. Comme cela est visible sur **la** **figure 4**, la couche de matériau adhésif 42 est en saillie par rapport à la première interface 18. Ceci permet notamment d'offrir une protection contre les chocs et les agressions sur le microcircuit 16 puisque ce dernier n'est pas directement exposé mais au contraire est située en retrait par rapport à la couche. En outre, de préférence, avant sa première utilisation, la couche de matériau 42 est protégée par un film non adhésif retirable 43.

Le dispositif électronique 10 précédemment décrit peut être fourni sous forme d'un ensemble 44 de personnalisation comprenant le support de lecture de carte 24 et un corps de carte 46 de dimensions correspondantes à celles définies par le format ID-1 conforme à la norme ISO 7816 muni d'une prédécoupe 48 détachable délimitant la carte 12, comme cela est représenté sur **la** **figure 5****.**

On va maintenant décrire les principaux aspects de fonctionnement d'un dispositif selon l'invention, fourni par exemple sous forme de l'ensemble de personnalisation 44.

L'utilisateur détache alors la carte 12 du corps de carte 46 et ôte le film non-adhésif de protection 43 de manière à découvrir la surface autocollante de la couche 42. Il positionne alors la carte 12 dans l'emplacement 38 prévu à cet effet sur le support 24 en respectant les indications de positionnement fournies par les profils respectifs de la carte 12 et de l'emplacement 38.

Les deux interfaces 18, 26 sont alors, dans cette position d'utilisation, en vis-à-vis l'une de l'autre de sorte qu'elles peuvent coopérer entre elles, notamment en cas de sollicitation électronique ou magnétique des moyens de communication 30 de données du dispositif 10.

Ainsi, par exemple, l'utilisateur approche le dispositif électronique d'un équipement externe tel qu'un lecteur de carte externe à champ proche, et un courant circule à l'intérieur de l'antenne 34 permettant l'établissement d'une communication à champ proche entre l'équipement externe et le microcircuit 16. Eventuellement, l'utilisateur peut insérer le connecteur de type USB dans un équipement externe, tel qu'un ordinateur personnel, et le microcircuit 16 peut ainsi échanger des données avec cet ordinateur via le connecteur.

La présentation de la carte sous forme de « sticker » autocollant est particulièrement avantageuse car elle permet notamment de simplifier la fabrication du support de lecture de carte. En particulier, le support de lecture de carte doit simplement comporter une surface sensiblement plane sur laquelle la carte peut être collée.

Il est bien entendu que les modes de réalisation qui viennent d'être décrits ne présentent aucun caractère limitatif et qu'ils pourront recevoir toute modification désirable sans sortir pour cela du cadre de l'invention. En particulier, l'invention s'applique également à tout dispositif électronique comprenant un support de lecture de carte muni d'une surface sensiblement plane de dimensions sensiblement égales à celles de la carte.

## Revendications

1. Dispositif électronique (10) comprenant une carte (12) à microcircuit (16) comprenant une première face (14A) portant une première interface de contact (18) raccordée au microcircuit (16) et une deuxième face (14B) portant un élément (22) de personnalisation du dispositif (10), et un support (24) de lecture de la carte (12) portant une deuxième interface de contact (26) configurée pour coopérer avec la première interface (18) par contact électrique, le support (24) comprenant un boîtier (28) muni d'une face externe (28S) délimitant un emplacement (38) de réception de la carte (12) à l'intérieur duquel affleure sensiblement la deuxième interface (26), la carte (12) étant rapportée sur cet emplacement (38) en faisant coopérer les deux interfaces (18, 26) entre elles de manière à ce que l'élément de personnalisation (22) soit visible, **caractérisé en ce que** la carte est rapportée sur cet emplacement par collage.

2. Dispositif (10) selon la revendication précédente, dans lequel le support (24) comprend des moyens (30) de communication de données avec un équipement extérieur raccordés à la deuxième interface (26) de manière à ce que des données puissent être échangées entre le microcircuit (16) et les moyens (30) lorsque les deux interfaces (18, 26) coopèrent.

3. Dispositif (10) selon la revendication précédente, dans lequel les moyens de communication (30) comprennent un connecteur (32) conforme à une norme prédéfinie de clé mémoire et/ou une antenne (34) de communication à champ proche.

4. Dispositif (10) selon la revendication 2 ou 3, dans lequel le support (24) comprend des moyens de conversion d'un protocole de communication du microcircuit (16) en un protocole de communication des moyens (30) et inversement.

5. Dispositif (10) selon l'une quelconque des revendications 2 à 4, dans lequel l'élément de personnalisation (22) est associé à au moins une donnée de personnalisation mémorisée dans le microcircuit (16) et accessible à l'aide des moyens de communication (30).

6. Dispositif (10) selon l'une quelconque des revendications précédentes, dans lequel l'emplacement (38) est délimité par une bordure (40) formant cadre de positionnement de la carte (12) sur l'emplacement (38).

7. Dispositif (10) selon la revendication précédente, dans lequel le cadre (40) et la carte (12) ont un profil à détrompeur complémentaire afin d'imposer un sens de montage de la carte (12) sur l'emplacement (38).

8. Dispositif (10) selon l'une quelconque des revendications précédentes, dans lequel la première interface (18) comprend une pluralité de plages de contact (20) et la deuxième interface (26) comprend une pluralité de connecteurs balais (37) faisant saillie sur l'emplacement (38).

9. Dispositif (10) selon l'une quelconque des revendications précédentes, dans lequel la carte (12) comprend un corps de format inférieur au format ID-1 défini par la norme ISO-7816.

10. Carte à microcircuit (12) conforme à une carte du dispositif selon l'une quelconque des revendications précédentes, **caractérisée en ce que** la carte (12) comprend sur la première face (14A) une couche de matériau adhésif autocollant (42) agencée pour entourer sensiblement la première interface (18).

11. Carte (12) selon la revendication précédente, dans laquelle le microcircuit (16) est disposé en retrait par rapport à la couche de matériau adhésif (42) surélevée.

## Patentansprüche

1. Elektronische Einrichtung (10), umfassend eine Karte (12) mit Mikroschaltung (16), umfassend eine erste Seite (14A), die eine erste Kontaktschnittstelle (18), die an die Mikroschaltung (16) angeschlossen ist, trägt, und eine zweite Seite (14B), die ein Element (22) zur Personalisierung der Vorrichtung (10) trägt, und einen Träger (24) zum Lesen der Karte (12), der eine zweite Kontaktschnittstelle (26) trägt, die derart ausgeführt ist, dass sie mit der ersten Schnittstelle (18) durch elektrischen Kontakt zusammenwirkt, wobei der Träger (24) ein Gehäuse (28) umfasst, das mit einer Außenseite (28S) versehen ist, die eine Stelle (38) zur Aufnahme der Karte (12) begrenzt, in der im Wesentlichen die zweite Schnittstelle (26) angrenzend angeordnet ist, wobei die Karte (12) auf diese Stelle (38) aufgesetzt ist, wobei ein Zusammenwirken der beiden Schnittstellen (18, 26) bewirkt wird, so dass das Personalisierungselement (22) sichtbar ist, **dadurch gekennzeichnet, dass** die Karte auf diese Stelle durch Kleben aufgesetzt ist.

2. Einrichtung (10) nach dem vorhergehenden Anspruch, bei der der Träger (24) Mittel (30) zur Kommunikation von Daten mit einer externen Ausrüstung umfasst, die an die zweite Schnittstelle (26) angeschlossen sind, so dass die Daten zwischen der Mikroschaltung (16) und den Mitteln (30) ausgetauscht werden können, wenn die beiden Schnittstellen (18, 26) zusammenwirken.

3. Einrichtung (10) nach dem vorhergehenden Anspruch, bei der die Kommunikationsmittel (30) einen Anschluss (32) nach einer vordefinierten Speicherschlüsselnorm und/oder eine Nahfeldkommunikationsantenne (34) umfassen.

4. Einrichtung (10) nach Anspruch 2 oder 3, bei der der Träger (24) Mittel zur Umwandlung eines Kommunikationsprotokolls der Mikroschaltung (16) in ein Kommunikationsprotokoll der Mittel (30) und umgekehrt umfasst.

5. Einrichtung (10) nach einem der Ansprüche 2 bis 4, bei der das Personalisierungselement (22) mindestens einem Personalisierungsdatum zugeordnet ist, das in der Mikroschaltung (16) gespeichert und mit Hilfe der Kommunikationsmittel (30) zugänglich ist.

6. Einrichtung (10) nach einem der vorhergehenden Ansprüche, bei der die Stelle (38) durch einen Rand (40) begrenzt ist, der einen Rahmen zur Positionierung der Karte (12) auf der Stelle (38) bildet.

7. Einrichtung (10) nach dem vorhergehenden Anspruch, bei der der Rahmen (40) und die Karte (12) ein komplementäres Unverwechselbarkeitsprofil haben, um eine Montagerichtung der Karte (12) auf der Stelle (38) vorzugeben.

8. Einrichtung (10) nach einem der vorhergehenden Ansprüche, bei der die erste Schnittstelle (18) eine Vielzahl von Kontaktbereichen (20) umfasst, und die zweite Schnittstelle (26) eine Vielzahl von Schleifkontakten (37), die an der Stelle (38) herausragen, umfasst.

9. Einrichtung (10) nach einem der vorhergehenden Ansprüche, bei der die Karte (12) einen Körper mit einem kleineren Format als das ID-1-Format, das durch die Norm ISO-7816 definiert ist, umfasst.

10. Karte mit Mikroschaltung (12) gemäß einer Karte der Einrichtung nach einem der vorhergehenden Ansprüche, **dadurch gekennzeichnet, dass** die Karte (12) auf der ersten Seite (14A) eine selbst klebende Haftschicht (42) umfasst, die derart angeordnet ist, dass sie im Wesentlichen die erste Schnittstelle (18) umgibt.

11. Karte (12) nach dem vorhergehenden Anspruch, bei der die Mikroschaltung (16) in Bezug zu der überhöhten Haftschicht (42) zurückgesetzt angeordnet ist.

## Claims

1. An electronic device (10) comprising a microcircuit (16) card (12) comprising a first face (14A) supporting a first contact interface (18) connected to the microcircuit (16) and a second face (14B) supporting a customization element (22) of the device (10), and a support (24) for reading the card (12) supporting a second contact interface (26) configured to cooperate with the first interface (18) by electrical contact, the support (24) comprising a housing (28) provided with an external face (28S) defining a location (38) for receiving the card (12) inside which the second interface (26) is essentially flush, the card (12) being attached on that location (38), making the two interfaces (18, 26) cooperate with each other such that the customization element (22) is visible, **characterized in that** the card is attached by adhesion on this location.

2. The device (10) according to the preceding claim, wherein the support (24) comprises means (30) for communicating data with outside equipment connected to the second interface (26) such that data can be exchanged between the microcircuit (16) and the means (30) when the two interfaces (18, 26) cooperate.

3. The device (10) according to the preceding claim, wherein the communication means (30) comprises a connector (32) in compliance with a predefined USB key standard and/or a near field communication antenna (34).

4. The device (10) according to claim 2 or 3, wherein the support (24) comprises means for converting a communication protocol of the microcircuit (16) into a communication protocol of the means (30) and vice versa.

5. The device (10) according to any one of claims 2 to 4, wherein the customization element (22) is connected to at least one customization data stored in the microcircuit (16) and accessible using communication means (30).

6. The device (10) according to any one of the preceding claims, wherein the location (38) is defined by an edging (40) forming a positioning frame of the card (12) on the location (38).

7. The device (10) according to the preceding claim, wherein the frame (40) and the card (12) have a complementary key profile in order to impose a mounting direction of the card (12) on the location (38).

8. The device (10) according to any one of the preceding claims, wherein the first interface (18) comprises a plurality of connecting pads (20) and the second interface (26) comprises a plurality of brush connectors (37) protruding on the location (38).

9. The device (10) according to any one of the preceding claims, wherein the card (12) comprises a body with a format smaller than format ID-1 defined by standard ISO-7816.

10. A microcircuit card (12) according to a card of the device according to any one of the preceding claims, **characterized in that** the card (12) comprises on the first face (14A), a layer of self-adhesive material (42) arranged to essentially surround the first interface (18).

11. The card (12) according to the preceding claim, wherein the microcircuit (16) is arranged withdrawn in relation to the raised layer of adhesive material (42).
